(19) **Europäisches Patentamt**

**European Patent Office**

**Office européen des brevets**

(11) **EP 0 787 605 B1**

(12) **FASCICULE DE BREVET EUROPEEN**

(45) Date de publication et mention
de la délivrance du brevet:
**25.06.2003 Bulletin 2003/26**

(51) Int Cl.⁷: **B60C 23/06**

(21) Numéro de dépôt: **97100649.9**

(22) Date de dépôt: **17.01.1997**

(54) **Dispositif de surveillance de la pression de gonflage des pneumatiques d'un véhicule**

Einrichtung zum Überwachen des Luftdruckes in den Luftreifen eines Fahrzeuges

Apparatus for monitoring air pressure in the tyres of a vehicle

(84) Etats contractants désignés:
**DE ES FR GB IT**

(30) Priorité: **01.02.1996 FR 9601339**

(43) Date de publication de la demande:
**06.08.1997 Bulletin 1997/32**

(73) Titulaire: **COMPAGNIE GENERALE DES
ETABLISSEMENTS MICHELIN-MICHELIN & CIE
F-63040 Clermont-Ferrand Cédex 01 (FR)**

(72) Inventeur: **Drieux, Jean-Jacques
63530 Volvic (FR)**

(74) Mandataire: **Dequire, Philippe Jean-Marie Denis
Michelin & Cie,
Service SGD/LG/PI-LAD
63040 Clermont Ferrand Cedex 9 (FR)**

(56) Documents cités:
**DE-A- 2 341 423        FR-A- 2 200 126
US-A- 4 149 140**

## Description

L'invention concerne un dispositif avertisseur du sous-gonflage de l'un des pneumatiques d'un véhicule basé sur l'analyse des écarts des positions des centre-roues relativement au châssis du véhicule. Elle a aussi pour objet un système de gonflage centralisé incluant le dispositif précédent.

En matière de sécurité d'utilisation des véhicules automobiles, il est particulièrement important de respecter les pressions de gonflage recommandées pour chacun des pneumatiques du véhicule. Une pression de gonflage incorrecte peut également entraîner une augmentation de la consommation de carburant et une détérioration de la durée de vie du pneumatique, voire sa détérioration définitive. L'usage des pneumatiques sans chambre à air (dits « tubeless ») rend la surveillance permanente des pressions de gonflage d'autant plus nécessaire que, en cas de crevaison, de tels pneumatiques ne se dégonflent la plupart du temps que très lentement. Il en résulte que le conducteur peut utiliser son véhicule avec un pneumatique sous-gonflé pendant assez longtemps avant de se rendre compte de la crevaison.

De nombreux dispositifs de surveillance de la pression basés sur une mesure directe de la pression de gonflage ont été divulgués. A titre d'exemple, le brevet US 4,703,650 présente un dispositif de codage utilisable pour la transmission de mesures de pression et de température depuis la roue vers le véhicule. Le brevet US 5,285,189 concerne un dispositif transmettant par radio des mesures de pression à une unité centrale. Mais ces dispositifs n'ont pas encore connu, à ce jour, une large diffusion en raison de leur coût trop élevé dans le premier cas, et de problèmes de fiabilité dans le deuxième cas notamment dus à la nécessité d'utiliser des piles pour alimenter les capteurs de pression.

D'autres dispositifs utilisant des mesures indirectes de la pression de gonflage ont aussi été présentés. Parmi ceux-ci, de nombreux brevets, tel FR 2,568,519, sont basés sur l'analyse des variations de rayon de roulement des pneumatiques en fonction de leur pression de gonflage. En dépit de nombreux efforts développés, cette technique n'a pas non plus connu une large diffusion à cause du manque de sensibilité du procédé dû notamment au fait que les lois d'évolution du rayon de roulement varient en fonction des pneumatiques concernés, ces lois pouvant même ne pas être biunivoques.

Parmi d'autres méthodes indirectes, le brevet US 2,499,669 utilise le fait que le dégonflement de l'un des pneumatiques d'un essieu entraîne un écartement de ce pneumatique relativement au châssis du véhicule accompagné d'une inclinaison de l'essieu. Ce brevet divulgue ainsi un dispositif de surveillance de la pression des pneumatiques d'un véhicule basé sur la détection d'un écartement anormal de l'un des centre-roue des pneumatiques relativement au châssis du véhicule. Cependant, ce dispositif propose une détection indépendante pour chaque pneumatique et pour éviter de trop nombreuses fausses alarmes, le seuil de détection doit être choisi beaucoup trop bas pour pouvoir être réellement efficace.

Le brevet US 3,900,828 présente un dispositif d'alerte du sous-gonflage de l'un des pneumatiques du train d'atterrissage d'un avion utilisant le même principe mais avec une compensation entre les quatre pneumatiques de deux essieux. Chaque bogie comportant deux essieux rigidement liés par un axe central et quatre roues est surveillé indépendamment. Des capteurs à jauges de déformation placés sur les essieux de part et d'autre de l'axe central mesurent la charge portée par chaque roue. Les signaux pour chaque bogie sont additionnés diagonalement. Une alerte est donnée lorsque un écart entre les signaux diagonaux est supérieur à un seuil donné.

Mais, le manque de sensibilité de ces dispositifs a occasionné de nombreuses fausses alarmes qui n'ont pas pu être totalement réglées par un traitement plus complexe des signaux obtenus (US 4 450 385) et ces dispositifs ont été abandonnés au profit d'une méthode de surveillance basée sur une mesure directe des pressions de gonflage (US 4,283,707).

Le document DE 23 41 423 divulgue un dispositif de détection, notamment, d'un sous-gonflage de pneumatique correspondant au préambule de la revendication 1.

Le besoin existe donc toujours, pour des véhicules routiers, tourisme et poids lourd, d'un dispositif de détection du sous-gonflage des pneumatiques basé sur une mesure indirecte qui soit d'une grande sensibilité et d'un coût suffisamment réduit pour pouvoir être développé en grande série.

Dans ce qui suit, on entend par « porte-roue » les pièces qui portent effectivement les roues sans autre découplage que les rotations de roulement de ces roues, ainsi que les pièces de suspension directement reliées aux pièces précédentes et dont les déplacements sont similaires. On entend par « essieu » l'ensemble des pièces situées transversalement sous le châssis d'un véhicule et supportant son poids. Chaque essieu comprend au moins deux roues et leurs porte-roue.

L'invention a pour objet un dispositif de détection du sous-gonflage adaptable à tous les véhicules routiers qu'ils soient munis de suspensions indépendantes ou d'essieux rigides. Ce dispositif est particulièrement simple, peu coûteux et d'une grande sensibilité.

L'invention a pour objet un dispositif avertisseur du sous-gonflage de l'un des pneumatiques d'un véhicule comprenant un châssis et au moins deux essieux avec deux roues équipées de pneumatiques, chaque essieu comportant un élément en forme générale de U dont la partie centrale a une position fixe relativement au châssis du véhicule et dont les extrémités sont reliées chacune à l'un des porte-roue des roues de l'essieu de telle sorte que tout écart de position entre les deux roues relativement au châssis du véhicule entraîne une torsion dudit élément. Ce dispositif est caractérisé en ce qu'il comprend :

- des moyens de mesure des écarts de position entre les deux roues d'un même essieu donnant pour un essieu i, $\delta_i$ et pour un essieu j, $\delta_j$ ;
- des moyens de combinaison entre les essieux des écarts mesurés ; et
- des moyens d'analyse du résultat de la combinaison et de déclenchement d'une alerte lorsque ce résultat satisfait une relation donnée ; et

en ce que les moyens de combinaison calculent la relation :

$$\Delta_{ij} = K\delta_i - \delta_j$$

dans laquelle K est une fonction caractéristique des essieux i et j du véhicule.

Le moyen de mesure ainsi défini n'est sensible qu'aux variations de position relative des roues relativement au châssis, il présente ainsi une remarquable sensibilité à tout écart de position relative des roues, quelle que soit la charge portée par l'essieu.

Ce dispositif peut être adapté à tous les véhicules routiers dès lors que le dégonflement de l'un des pneumatiques entraîne son écartement relativement au châssis.

Dans le cas de véhicules équipés d'au moins deux essieux, la position moyenne du châssis relativement au sol ne varie que très peu en fonction de la pression de gonflage de l'un des pneumatiques, ce qui explique que la distance relative moyenne entre la roue de ce pneumatique et le châssis varie elle très fortement.

Dans le cas d'un véhicule équipé d'au moins deux essieux, il est avantageux de combiner entre au moins deux essieux les écarts mesurés pour éliminer les conséquences du roulis du véhicule.

Cette combinaison peut avantageusement tenir compte des variations de rigidité des suspensions entre les essieux.

Avantageusement, aussi, le dispositif selon l'invention utilise, lorsqu'elles existent, les barres antiroulis des suspensions des véhicules. Ce dispositif attribue donc une fonction supplémentaire à ces barres antiroulis.

Le capteur de mesure de la torsion peut être inclus dans un manchon fixable sur la barre antiroulis. Cela permet de commercialiser des dispositifs adaptables aisément à tous les véhicules équipés de barres antiroulis tout en garantissant une excellente qualité de la mesure effectuée par le capteur.

L'invention a aussi pour objet un système de gonflage centralisé des pneumatiques d'un véhicule, comprenant des moyens pour mesurer et modifier la pression de gonflage de chaque pneumatique, associé à un dispositif avertisseur du sous-gonflage tel que précédemment décrit.

L'invention a aussi pour objet un procédé de surveillance de la pression des pneumatiques selon la revendication 6.

L'invention a aussi pour objet un procédé de détection du sous-gonflage selon la revendication 8.

L'invention est explicitée par les figures et la description suivantes, données seulement à titre d'exemple

- la figure 1 est une vue schématique d'un véhicule équipé d'un dispositif selon l'invention ;
- la figure 2 présente un mode de fixation d'un capteur de mesure sur une barre antiroulis ;
- la figure 3 présente un schéma d'un mode de réalisation de l'invention ;
- la figure 4 est un enregistrement des signaux obtenus lors d'un roulage ;

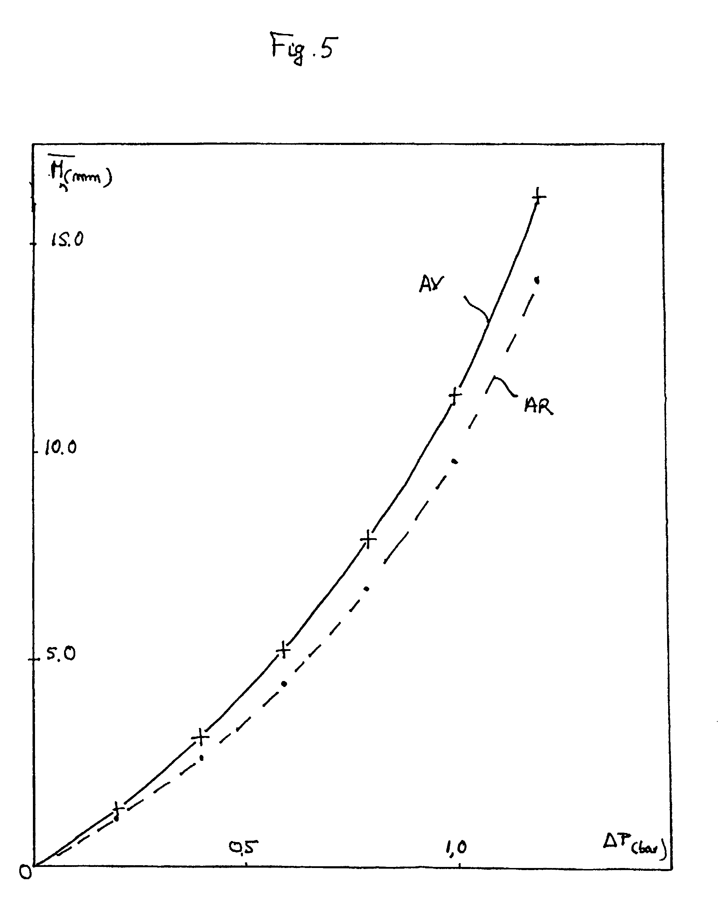

- la figure 5 présente l'évolution de l'écart relatif de position lors de la diminution de la pression de gonflage de l'un des pneumatiques du véhicule.

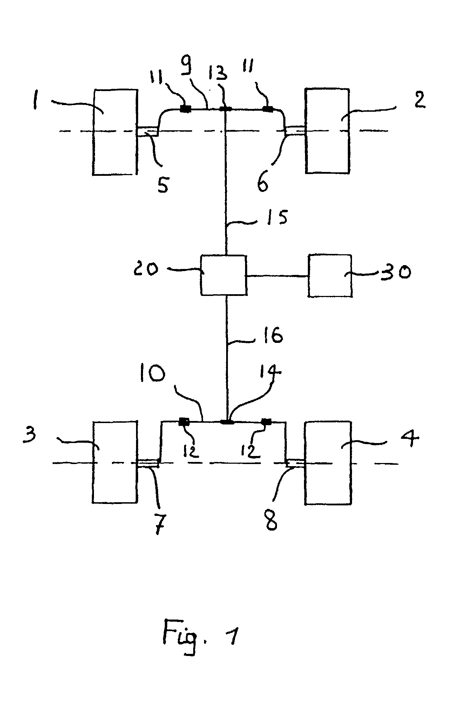

La figure 1 présente schématiquement l'implantation d'un dispositif selon l'invention sur un véhicule dont les deux essieux avant et arrière sont équipés de barres antiroulis.

Sur cette figure sont représentés les roues 1, 2, 3, 4, les porte-roue 5, 6, 7, 8 et les deux barres antiroulis 9 de l'essieu avant et 10 de l'essieu arrière. Ces barres antiroulis 9, 10 sont reliées au châssis du véhicule par les paliers 11 et 12, leurs extrémités sont fixées aux porte-roue 5, 6 7, 8. En conséquence, tout écart de position entre les deux roues d'un même essieu relativement au châssis va entraîner une torsion de la barre antiroulis. Cette barre limite donc le roulis du châssis, d'où son nom de barre antiroulis.

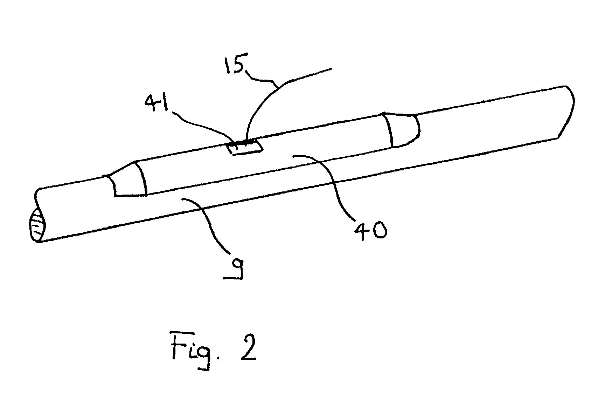

Chaque barre antiroulis 9, 10 est équipée d'un capteur 13, 14 de mesure de sa torsion. Ce capteur peut être un pont de jauges de contraintes par exemple. Ce pont de jauge 41 peut être directement collé sur la surface de la barre antiroulis. Mais, notamment dans le cas où l'on installe un dispositif de détection selon l'invention sur un véhicule non encore équipé, il est souhaitable d'implanter ces jauges 41 dans un manchon 40 lui-même collé sur la surface de la barre antiroulis 9 (voir figure 2). Cela permet de mieux maîtriser les conditions de la mise en place du capteur de mesure et ainsi d'améliorer la qualité et la fiabilité de la mesure.

Les signaux de mesure sont transmis à une unité centrale 20 par les lignes 15 et 16. L'unité centrale est reliée à une alarme 30.

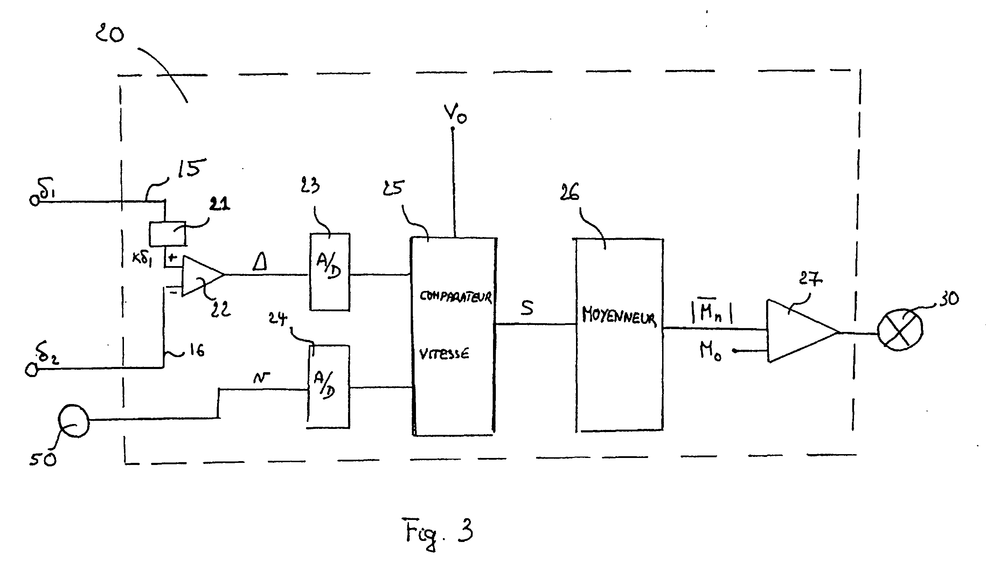

La figure 3 présente un mode de réalisation du dispositif. Après avoir été usuellement conditionnés et amplifiés, les signaux $\delta_1$ et $\delta_2$ issus des capteurs 13 et 14 sont repris par les lignes 15 et 16 jusqu'à l'unité cen-

trale 20. Le signal $\delta_1$ est transformé en $K\delta_1$ par le multiplieur 21. Le coefficient K sert à tenir compte des différences éventuelles de rigidité entre les suspensions des essieux avant et arrière du véhicule. Il est réglé de telle sorte que pour un roulis identique, les signaux de mesure $K\delta_1$ et $\delta_2$ sont identiques. On peut aisément déterminer expérimentalement ce paramètre K, par exemple en imposant un roulis donné (c'est-à-dire un angle de rotation donné du châssis relativement à un axe longitudinal) au châssis du véhicule avec un cric usuel. Bien entendu, cette détermination doit être faite lorsque le véhicule a tous ses pneumatiques correctement gonflés.

Le comparateur 22 soustrait les signaux $K\delta_1$ et $\delta_2$ pour obtenir le signal :

$$\Delta = K\delta_1 - \delta_2.$$

Ce signal est numérisé par le convertisseur 23 avec une fréquence d'échantillonnage f.

De façon préférentielle, l'unité centrale reçoit aussi un signal v issu du tachymètre 50 du véhicule donnant la vitesse du véhicule. Ce signal v est numérisé par le convertisseur 24 avec la même fréquence d'échantillonnage et l'élément 25 effectue une comparaison de la valeur de la vitesse du véhicule v relativement à une valeur de référence $V_0$ dans le but d'inhiber les mesures de détection du sous-gonflage lorsque la vitesse est inférieure à $V_0$. Le signal issu de l'élément 25 est S avec :

S = $\Delta$ si v est supérieur ou égal à $V_0$, et
S = 0 si v est inférieur à $V_0$.

L'élément 26 effectue une moyenne glissante sur n points de S. Pour cela, il garde en mémoire les n dernières valeurs de S et en calcule la moyenne $\overline{M}_n$.

Le comparateur 27 teste la valeur absolue de $\overline{M}_n$ relativement à un seuil $M_0$ et transmet une alarme à la lampe 30 dès que la valeur absolue de $\overline{M}_n$ dépasse le seuil $M_0$.

Le fonctionnement du dispositif est le suivant. Lorsque le véhicule est placé sur une surface plane et avec un chargement gauche/droite équilibré, pour chaque essieu, les positions relatives des roues relativement au châssis sont quasiment identiques. La torsion des barres antiroulis est nulle et les signaux $\delta_{av}$ et $\delta_{ar}$ et donc leur différence sont aussi nuls. En roulage, en raison des inégalités de la chaussée, des mouvements du châssis dus aux virages les positions relatives des deux roues d'un même essieu relativement au châssis ne sont plus identiques en valeur instantanée, les signaux $\delta_{av}$ et $\delta_{ar}$ et leur différence $\Delta$ non plus. En revanche, les valeurs moyennes de ces signaux $\delta_{av}$ et $\delta_{ar}$ restent proches de zéro sauf lorsque le roulis du véhicule est notable, c'est à dire lorsque l'inclinaison du véhicule relativement aux deux essieux avant et arrière est marquée.

Dans ce cas, lorsque les signaux $\delta_{av}$ et $\delta_{ar}$ ont une valeur proche due au roulis du véhicule, la compensation proposée permet d'éliminer cette perturbation par le calcul de $\Delta$. L'utilisation du facteur K améliore sensiblement la fiabilité de la mesure.

En conclusion, c'est seulement lorsque la pression de gonflage d'un pneumatique diminue que la valeur moyenne du signal $\Delta$, $\overline{M}_n$, s'écarte sensiblement de zéro.

Un véhicule PEUGEOT 405 SRI a été équipé de ponts de jauges sur ses deux barres antiroulis. Le signal de chaque pont a été ajusté de telle sorte que pour les deux essieux avant et arrière, un écart de position relative entre le châssis et les porte-roue gauche et droite de 2 mm corresponde à un signal de 0,1 volt. Le facteur K correspondant est de l'ordre de 1,1 à 1,2.

Les signaux issus des ponts de jauges ont été échantillonnés avec une fréquence d'échantillonnage de 1 Hz. Leur analyse a été faite en calculant une moyenne glissante sur 60 points, soit aussi 60 secondes. Les mesures réalisées avec une vitesse de roulage inférieure à 5 km/h n'ont pas été prises en compte.

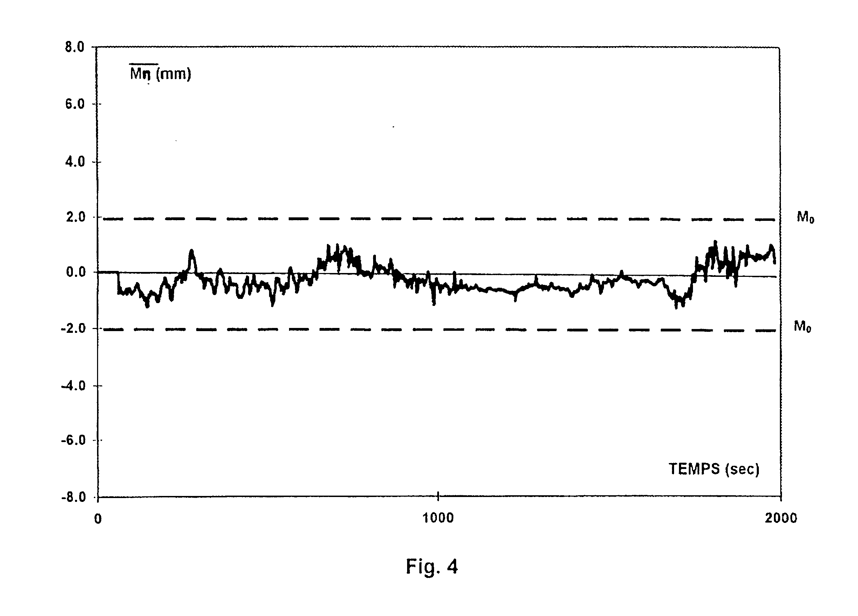

La figure 4 présente l'évolution pendant un roulage de la moyenne glissante $\overline{M}_n$, alors que les quatre pneumatiques du véhicule sont normalement gonflés à une pression à froid de 2,0 bar. Les vitesses, revêtements routiers et circuits pendant ce test ont été très variables. Ce graphe indique que la valeur moyenne des écarts se situe toujours entre +/- 0,05 volt ce qui correspond à +/- 1 mm d'écart de position relative. Le bruit du signal est donc, dans les conditions de l'essai, de +/- 1 mm d'écart de position relative de l'un des pneumatiques relativement aux trois autres. Dans ces conditions, une variation du signal supérieure à +/- 0,1 volt, soit un écart de position relative supérieur à +/- 2 mm correspond à coup sûr à un problème de gonflage de l'un des pneumatiques.

Le graphe 5 présente l'évolution de la valeur moyenne du signal $\overline{M}_n$ lorsque la pression de gonflage de l'un des pneumatiques avant gauche, ou arrière gauche est progressivement diminuée. Un seuil de détection de 0,1 volt ou 2 mm d'écart de position relative correspond sensiblement à une diminution de 0,25 bar à l'avant et de 0,3 bar à l'arrière. En effet, pour un écart de position donné, la correspondance en pression est fonction du pneumatique et des rigidités de suspension de l'essieu concerné. Il est à noter, et c'est un avantage majeur de ce procédé de détection, que la sensibilité du dispositif augmente avec la diminution de pression. L'évolution de l'écart moyen avec la pression est d'autant plus forte que la pression est faible. Cette loi de variation est sans aucune équivoque.

Ce dispositif permet ainsi une détection simple et particulièrement fine du sous-gonflage de l'un des pneumatiques du véhicule. Il est souhaitable pour obtenir une bonne robustesse du système de neutraliser les mesures faites à une vitesse de roulage faible. Car alors, des problèmes de frottement des barres antiroulis dans leurs paliers ou de stationnement avec une roue très décalée relativement au châssis relativement aux autres peuvent donner lieu à des alarmes injustifiées.

Avantageusement, ce dispositif peut comporter un dispositif de remise à zéro de la chaîne d'acquisition pour tenir compte de la possibilité légale d'avoir sur le même essieu des pneumatiques avec des profondeurs de sculpture différentes de 5 mm. Il ne faut pas que le système détecte des différences d'usure qui restent légales. En rendant possible une remise à zéro après chaque intervention sur les pneumatiques, telle que réajustement des pressions de gonflage ou changement, on peut utiliser la sensibilité maximale du système.

L'exemple de dépouillement présenté privilégie la détection de dégonflements relativement lents avec un temps d'intégration de 60 secondes. Cela permet d'avoir une très bonne précision de détection. Bien entendu, il peut être avantageux d'effectuer ce dépouillement avec deux temps d'intégration différents ou plus pour pouvoir prendre en compte les cinétiques de dégonflements très variées effectivement observées dans la réalité. On peut aussi échantillonner les mesures en fonction de la distance parcourue par le véhicule au lieu du temps.

Ce dispositif peut s'adapter aisément à tous les véhicules équipés de barres antiroulis avec des essieux rigides ou à suspensions indépendantes. Dans le cas de véhicules ne disposant pas de telles barres, on peut les équiper de fausses barres antiroulis dont la seule fonction sera de mesurer l'écart de position entre les deux roues gauche et droite de l'essieu relativement au châssis.

La très grande sensibilité du dispositif permet aussi son application dans le cas de véhicules équipés de roues jumelées. Les roues jumelées sont alors considérées comme une roue unique pour sa mise en oeuvre.

Dans le cas des véhicules de tourisme, on constate que K est sensiblement une constante. En revanche, dans le cas de véhicules poids lourd, la raideur des suspensions varie fortement avec la charge portée par chaque essieu, en conséquence, K devient une fonction des charges portées par les deux essieux considérés. La détermination de cette fonction peut, comme précédemment, être faite expérimentalement.

Le procédé de calcul de la fonction $\Delta$ s'applique aussi dans le cas où l'on dispose de capteurs donnant la position de chaque roue relativement au châssis. La détection d'un sous-gonflage consiste alors à

- pour chaque essieu i, mesurer les positions $d_{i1}$ et $d_{i2}$ de chaque roue relativement au châssis et calculer :

$$\delta_i = d_{i1} - d_{i2} \; ;$$

- pour chaque couple d'essieux i et j, calculer la

relation : $\Delta_{ij} = K\delta_i - \delta_j$, dans laquelle K est une fonction caractéristique des essieux i et j du véhicule ;
- déclencher une alerte lorsque $\Delta_{ij}$ satisfait une relation donnée.

L'association entre un dispositif selon l'invention et un système de gonflage centralisé est particulièrement avantageuse.

Les systèmes de gonflage centralisé comprennent une source ou une réserve d'air comprimé installée à bord du véhicule tel un compresseur, des canalisations reliant cette source aux pneumatiques par l'intermédiaire de joints tournants et un sélecteur permettant de connecter la source à chacun des pneumatiques : on peut citer les brevets FR 884,598 et EP 297,837. Le mode habituel de fonctionnement de ces installations consiste à mesurer périodiquement la pression de chaque pneumatique et à la corriger, le cas échéant, par gonflage ou dégonflage du pneumatique considéré.

Ces dispositifs centralisés de gonflage de la pression des pneumatiques d'un véhicule n'ont jusqu'à présent eu que des applications très limitées en raison de leur fonctionnement continu ou quasi continu indispensable pour leur efficacité. En particulier, les organes, notamment les joints tournants et les compresseurs, de ces dispositifs doivent être très largement dimensionnés pour pouvoir résister à cette utilisation permanente d'où des problèmes de coût de réalisation et de fonctionnement (résistance à l'avancement) prohibitifs pour une large utilisation.

L'association entre un détecteur selon l'invention et un dispositif de gonflage centralisé permet d'obtenir un système présentant des coûts de réalisation et de fonctionnement réduits.

En effet, un tel système peut voir son fonctionnement optimisé de la façon suivante :

- à chaque démarrage, vérification et réajustement de la pression de chaque pneumatique à l'aide du système centralisé de gonflage et de surveillance de la pression ;
- après cette vérification, arrêt du dispositif de gonflage centralisé et surveillance de la pression des pneumatiques avec le dispositif basé sur la mesure des écarts de position relative des porte-roue relativement au châssis ;
- en cas d'alerte, réactivation du dispositif de surveillance centralisé de la pression.

Avantageusement, on peut aussi prévoir une remise à zéro du dispositif de détection basé sur la mesure des écarts de position relative des porte-roue relativement au châssis à chaque démarrage après avoir vérifié et réajusté les pressions si nécessaire. De préférence, cette remise à zéro est effectuée avant l'arrêt des moyens centralisés de surveillance et de modification des pressions.

De cette façon, le dispositif de gonflage et de surveillance centralisé ne fonctionne qu'une fois à chaque démarrage du véhicule ce qui diminue de façon considérable les impératifs de résistance à la fatigue qu'il doit satisfaire et autorise ainsi une diminution très marquée de ses coûts de réalisation et de fonctionnement.

## Revendications

1. Dispositif avertisseur du sous-gonflage de l'un des pneumatiques d'un véhicule comprenant un châssis et au moins deux essieux avec deux roues (1, 2, 3, 4) équipées de pneumatiques, chaque essieu comportant un élément en forme générale de U (9, 10) dont la partie centrale a une position fixe relativement au châssis du véhicule et dont les extrémités sont reliées chacune à l'un des porte-roue (5, 6, 7, 8) des roues (1, 2, 3, 4) de l'essieu de telle sorte que tout écart de position entre les deux roues relativement au châssis du véhicule entraîne une torsion dudit élément, **caractérisé en ce que** ledit dispositif comprend :

   - des moyens de mesure desdits écarts de position entre les deux roues d'un même essieu donnant pour un essieu i, $\delta_i$ et pour un essieu j, $\delta_j$;
   - des moyens de combinaison (21, 22) entre les essieux des écarts mesurés ; et
   - des moyens d'analyse (25, 26) du résultat de la combinaison et de déclenchement d'une alerte (27, 30) lorsque ce résultat satisfait une relation donnée ; et

   **en ce que** lesdits moyens de combinaison (21, 22) calculent la relation :

   $$\Delta_{ij} = K\delta_i - \delta_j$$

   dans laquelle K est une fonction caractéristique des essieux i et j du véhicule.

2. Dispositif selon la revendication 1, dans lequel K est une fonction des charges supportées par les essieux i et j.

3. Dispositif selon la revendication 1, dans lequel K est une constante.

4. Dispositif selon l'une des revendications 1 à 3, dans lequel ledit élément en forme de U (9, 10) est une barre antiroulis (9, 10) de la suspension du véhicule.

5. Dispositif selon l'une des revendications 1 à 4, dans lequel lesdits moyens de mesure comprennent un capteur (13, 14, 41) de mesure de la torsion dudit élément (9, 10) inclus dans un manchon (40) fixable sur ledit élément (9, 10).

6. Procédé de surveillance de la pression des pneumatiques d'un véhicule équipé de moyens centralisés pour mesurer et modifier la pression de gonflage de chaque pneumatique ainsi que d'un dispositif de surveillance selon l'une des revendications 1 à 5, tel que :

   - à chaque démarrage, on vérifie et on réajuste, si nécessaire, la pression de gonflage de chaque pneumatique avec lesdits moyens centralisés de mesure et de modification de la pression ;
   - après cette vérification, on arrête le fonctionnement des moyens centralisés de mesure et de modification de la pression et on surveille la pression de gonflage des pneumatiques avec le dispositif de surveillance selon l'une des revendications 1 à 5 ;
   - en cas d'alerte, on remet en fonctionnement les moyens centralisés de mesure et de modification de la pression.

7. Procédé selon la revendication 6, tel que, après chaque démarrage et vérification de la pression de gonflage de chaque pneumatique avec les moyens centralisés de mesure et de modification de la pression et avant leur arrêt, on effectue une remise à zéro du dispositif de surveillance selon l'une des revendications 1 à 5.

8. Procédé de détection du sous-gonflage de l'un des pneumatiques d'un véhicule comprenant un châssis et au moins deux essieux avec deux roues équipées de pneumatiques, dans lequel :

   - pour chaque essieu i, on mesure les positions $d_{i1}$ et $d_{i2}$ de chaque roue relativement au châssis et on calcule :

   $$\delta_i = d_{i1} - d_{i2} ;$$

   - pour chaque couple d'essieux i et j, on calcule la relation : $\Delta_{ij} = K\delta_i - \delta_j$, dans laquelle K est une fonction caractéristique des essieux i et j du véhicule ;
   - on déclenche une alerte lorsque $\Delta_{ij}$ satisfait une relation donnée.

9. Procédé selon la revendication 8, dans lequel K est une fonction des charges supportées par les essieux i et j.

10. Procédé selon la revendication 8, dans lequel K est une constante.

**Patentansprüche**

1. Alarmvorrichtung für zu niedrigen Aufpumpdruck des einen der Reifen eines Fahrzeugs, das ein Fahrgestell und mindestens zwei Achsen mit zwei Rädern (1, 2, 3, 4) aufweist, die mit Reifen ausgerüstet sind, wobei jede Achse ein Element in allgemeiner U-Form (9, 10) aufweist, dessen mittlerer Abschnitt eine bezüglich des Fahrgestells des Fahrzeugs feste Lage hat, und dessen Enden jeweils mit einem der Radträger (5, 6, 7, 8) der Räder (1, 2, 3, 4) der Achse derart verbunden sind, daß jede Lageabweichung zwischen den beiden Rädern in Bezug auf das Fahrgestell des Fahrzeugs eine Torsion des genannten Elements veranlaßt, **dadurch gekennzeichnet, daß** die genannte Vorrichtung die folgenden Merkmale aufweist:

   - Mittel zur Messung der genannten Lageabweichungen zwischen den beiden Rädern ein und derselben Achse, wobei sich für die eine Achse i, $\delta_i$ und für die andere Achse j, $\delta_j$ ergibt;
   - Mittel zum Kombinieren (21, 22) der gemessenen Abweichungen zwischen den Achsen; und
   - Mittel zur Analyse (25, 26) des Ergebnisses der Kombination und zum Auslösen eines Alarms (27, 30), wenn das Ergebnis einer gegebenen Zuordnung entspricht; und

   daß die genannten Kombinationsmittel (21, 22) die folgende Zuordnung errechnen:

   $$\Delta_{i,\,j} = K\delta_i - \delta_j\,,$$

   worin K eine charakteristische Funktion der Achsen i und j des Fahrzeugs ist.

2. Vorrichtung nach Anspruch 1, worin K eine Funktion der Lasten ist, die von den Achsen i und j getragen wird.

3. Vorrichtung nach Anspruch 1, worin K eine Konstante ist.

4. Vorrichtung nach einem der Ansprüche 1 bis 3, worin das genannte, U-förmige Element (9, 10) ein Stabilisator bzw. eine "Antirollstange" (9, 10) der Fahrzeugaufhängung ist.

5. Vorrichtung nach einem der Ansprüche 1 bis 4, worin die genannten Meßmittel einen Meßfühler (13, 14, 41) für die Messung der Torsion des genannten Elements (9, 10) ist, der in eine Muffe (40) eingeschlossen ist, die auf dem genannten Element (9, 10) befestigbar ist.

6. Verfahren zur Überwachung des Drucks der Reifen eines Fahrzeugs, das mit zentralisierten Mitteln zur Messung und Modifizierung des Aufpumpdrucks eines jeden Reifens sowie mit einer Vorrichtung nach einem der Ansprüche 1 bis 5 ausgestattet ist, so daß:

   - man bei jeder Ingangsetzung den Aufpumpdruck eines jeden Reifens mit den genannten, zentralisierten Druck-Meß- und Druck-Modifizierungsmitteln bestätigt oder wieder einstellt;
   - man nach dieser Bestätigung die Funktion der zentralisierten Druck-Meß- und Druck-Modifizierungsmittel anhält und den Aufpumpdruck der Reifen mit der Überwachungsvorrichtung nach einem der Ansprüche 1 bis 5 überwacht; und
   - man im Fall eines Alarms die zentralisierten Druck-Meß- und Druck-Modifzierungsmittel wieder in Funktion setzt.

7. Verfahren nach Anspruch 6, so daß man nach jeder Ingangsetzung und Bestätigung des Aufpumpdrucks eines jeden Reifens mit den zentralisierten Druck-Meß- und Modifizierungsmitteln eine Rückstellung der Überwachungsvorrichtung nach einem der Ansprüche 1 bis 5 auf Null bewirkt.

8. Verfahren zum Erfassen des ungenügenden Aufpumpens eines der Reifen eines Fahrzeugs, das ein Fahrgestell und mindestens zwei Achsen mit zwei Rädern aufweist, die mit Reifen ausgestattet sind, worin:

   - man für jede Achse i die Lagen $d_{i1}$ und $d_{i2}$ eines jeden Rades relativ zum Fahrgestell mißt und errechnet:

   $$\delta_1 = d_{i1} - d_{i2};$$

   - man für jedes Paar von Achsen i und j die folgende Zuordnung errechnet: $\Delta_{ij} = K\delta_i - \delta_j$, worin K eine charakteristische Funktion der Achsen i und j des Fahrzeugs ist; und
   - man einen Alarm auslöst, wenn $\Delta_{ij}$ einer gegebenen Zuordnung entspricht.

9. Verfahren nach Anspruch 8, worin K eine Funktion der Lasten ist, die von den Achsen i und j getragen wird.

10. Verfahren nach Anspruch 8, worin K eine Konstante ist.

**Claims**

1. A device for warning of the under-inflation of one of the tyres of a vehicle comprising a chassis and at least two axles with two wheels (1, 2, 3, 4) equipped with tyres, each axle comprising an element of generally U-shape (9, 10) the central portion of which has a fixed position relative to the chassis of the vehicle and each of the ends of which are connected to one of the wheel holders (5, 6, 7, 8) of the wheels (1, 2, 3, 4) of the axle so that any difference in position between the two wheels relative to the chassis of the vehicle results in twisting of said element, **characterised in that** said device comprises:

   • means for measuring said differences in position between the two wheels of one and the same axle giving, for an axle i, $\delta_i$ and, for an axle j, $\delta_j$;

   • means (21, 22) for combining, between the axles, the distances measured; and

   • means (25, 26) for analysing the result of the combining and for triggering an alarm (27, 30) when this result satisfies a given relationship; and

   **in that** said combination means (21, 22) calculate the equation:

   $$\Delta_{ij} = K\delta_i - \delta_j.$$

   in which K is a characteristic function of the axles i and j of the vehicle.

2. A device according to claim 1, in which K is a function of the loads borne by the axles i and j.

3. A device according to claim 1, in which K is a constant.

4. A device according to one of claims 1 to 3, in which said U-shaped element (9, 10) is an anti-roll bar (9, 10) of the suspension of the vehicle.

5. A device according to one of claims 1 to 4, in which said measuring comprise a detector (13, 14, 41) for the measurement of the twist of said element (9, 10), included within a sleeve (40) which can be fastened on said element (9, 10).

6. A method of monitoring the pressure of the tyres of a vehicle equipped with centralised means for measuring and modifying the inflation pressure of each tyre and also a monitoring device according to one of claims 1 to 5, such that:

   -- upon each start, the inflation pressure of each tyre is verified and readjusted if necessary by said centralised pressure measurement and modification means;

   -- after this verification, the operation of the centralised pressure measurement and modification means is stopped and the inflation pressure of the tyres is monitored by the monitoring device according to one of claims 1 to 5;

   -- in the event of an alarm, the centralised pressure measurement and modification means are placed back in operation.

7. A method according to claim 6, such that, after each start and verification of the inflation pressure of each tyre by the centralised pressure measurement and modification means, and before they are stopped, the monitoring device according to one of claims 1 to 5 is reset to zero.

8. A method of detecting the under-inflation of one of the tyres of a vehicle comprising a chassis and at least two axles having two wheels equipped with tyres, in which:

   -- for each axle i, the positions $d_{i1}$ and $d_{i2}$ of each wheel relative to the chassis are measured and $\delta_i = d_{i1} - d_{i2}$ is calculated;

   -- for each pair of axles i and j, the relationship $\Delta_{ij} = K\delta_i - \delta_j$, in which K is a characteristic function of the axles i and j of the vehicle, is calculated;

   -- an alarm is given when $\Delta_{ij}$ satisfies a given relationship.

9. A method according to claim 8, in which K is a function of the loads borne by the axles i and j.

10. A method according to claim 8, in which K is a constant.

Fig. 1

Fig. 2

Fig. 3

Fig. 4

EP 0 787 605 B1

Fig.5